Europäisches Patentamt

(19) European Patent Office   (11) Publication number: **0 200 770**

Office européen des brevets   **B1**

(12) **EUROPEAN PATENT SPECIFICATION**

(45) Date of publication of patent specification: **25.04.90**   (51) Int. Cl.⁵: **B 01 J 19/00, B 01 F 3/08, F 02 M 25/02**

(21) Application number: **85905655.8**

(22) Date of filing: **06.11.85**

(86) International application number: **PCT/HU85/00064**

(87) International publication number: **WO 86/02860 22.05.86 Gazette 86/11**

(54) **APPARATUS AND PROCESS FOR FORMING MIXTURES.**

(30) Priority: **06.11.84 HU 410484**

(43) Date of publication of application: **12.11.86 Bulletin 86/46**

(45) Publication of the grant of the patent: **25.04.90 Bulletin 90/17**

(84) Designated Contracting States: **DE GB**

(56) References cited:
FR-A-2 257 019
FR-A-2 446 667
GB-A-2 062 091
GB-A-2 109 457
US-A-4 175 873

(73) Proprietor: **TATABANYAI SZENBANYAK**
**P.O. Box 323**
**H-2803 Tatabanya (HU)**

(72) Inventor: **KORCYL, Béla**
**Ságvári E. u. 11., III.1h.**
**H-2800 Tatabánya (HU)**
Inventor: **ENTZMANN, Karl**
**Nr. 152**
**A-8672 St. Kathrein a.H. (AT)**
Inventor: **VARGA, József**
**Vöröshadsereg utja 9., IV. 1h.**
**H-2890 Tata (HU)**
Inventor: **ZSOLYOMI, Zoltán**
**Bánhidai 1tp. 215**
**H-2800 Tatabánya (HU)**

(74) Representative: **Hedley, Nicholas James Matthew et al**
**TZ Gold & Company 9 Staple Inn**
**London WC1V 7QH (GB)**

Courier Press, Leamington Spa, England.

## Description

### Technical field

The invention relates to an apparatus for and a process of forming mixtures, having two or more components, for chemical reactions and mainly concerns the formation of mixtures containing fuel (e.g. oil) and water for combustion.

### Background art

It is known that heterogeneous chemical reactions, especially combustion, can be carried out faster and with higher efficiency when the reacting components are atomized so that the small reacting particles can directly contact each other.

### Disclosure of invention

The aim of the present invention is to form mixtures consisting of different components, so that at least one of the components is disintegrated into very small particles.

The present invention is believed to be generally applicable but especially useful in the field of combustion and so the invention will be described mainly in connection with combustion technology.

By the word "mixture", we mean either emulsions of fluids or suspensions of solid particles in fluids, and no distinction is made between mixtures according to the degree of dispersion of their components. Thus, for example, the invention relates to the formation of a mixture of different fluids, and a mixture of a fluid with a solid phase or with another fluid.

The word "combustion" is used herein to mean technical processes involving burning carried out not only in traditional furnaces, e.g. brick making kilns but also in internal combustion engines or in the combustion chamber of gas turbines.

As has already been mentioned, it is very important when carrying out chemical reactions, e.g. in the field of combustion technology, that the reacting phases, i.e. the fuel is disintegrated as much as possible and for this reason pulverized coal and atomized oil are often used. Nevertheless, known processes for crushing and pulverizing give rise to relatively large particles of fuel and these large particles burn only relatively slowly. Thus, generally, excess air must be provided to achieve complete combustion of the fuel. However, the use of excess air is disadvantageous and among these disadvantages are the following: (a) nitrogen in the air feed is heated in a furnace and expelled from the furnace resulting in a heat loss whose magnitude depends on the amount of excess air, and (b) the amount of carbon dioxide in the flue gas is low and that of carbon monoxide is rather high; also the $NO_x$ and sulfur content of the flue gas is also high. These latter components of the flue gas are pollutants and also indicate poor combustion efficiency.

FR—2446 667 describes a process and apparatus for preparing suspensions, particularly for the dispersion of solids of mining mud. The apparatus has a circular rotor having impact elements that intermesh with impact elements on a stator. The rotor and the stator are formed as flat horizontal plates and an inlet for mud is provided centrally within the stator and outlets for homogenised mud are provided around the perifery of the apparatus.

GB—1509901 describes a water/fuel emulsifier in which the individual components are fed into a chamber in which a vaned rotor is housed, the rotation of which about a horizontal axis, causes the components to form an emulsion. The specification also describes an emulsifier in which emulsification is achieved by subjecting the components to ultrasonic sound.

US—4 175 873 describes an emulisifier for forming emulsions from immiscible components which has a horizontal rotor formed as a flat plate provided with up-standing pins on its upper surface. The pins intermesh with pins on a stator. The components for the emulsion are fed to the centre of the rotor and are moved radially outwards by centrifugal force and the impact from the intermeshing pins forms the desired emulsion; outlets are provided around the perimeter of a housing enclosing the rotor.

It has been our aim to disintegrate at least one component of a mixture, e.g. the fuel, into very small particles.

According to the present invention, there is provided an apparatus as set out in claim 1.

According to a further aspect of the present, there is provided a process of forming mixtures havint two or more components, which comprises feeding the components into the gap of the apparatus defined immediately above.

The process of the invention can generally be carried out at room temperature. Nevertheless, sometimes, e.g. when atomizing a high-viscosity fuel oil, higher temperatures must be used so as to increase the efficiency of disintegration. In such cases heating up can be carried out before the components are fed to the apparatus of the invention, or heat can be transferred into the mixture during its treatment in the apparatus of the invention so as to reach the required temperature.

When the mixture formed in an apparatus according to the invention is introduced into a furnace, the combustion processes are extremely fast, because almost all the molecules of the fuel are in contact with oxygen molecules.

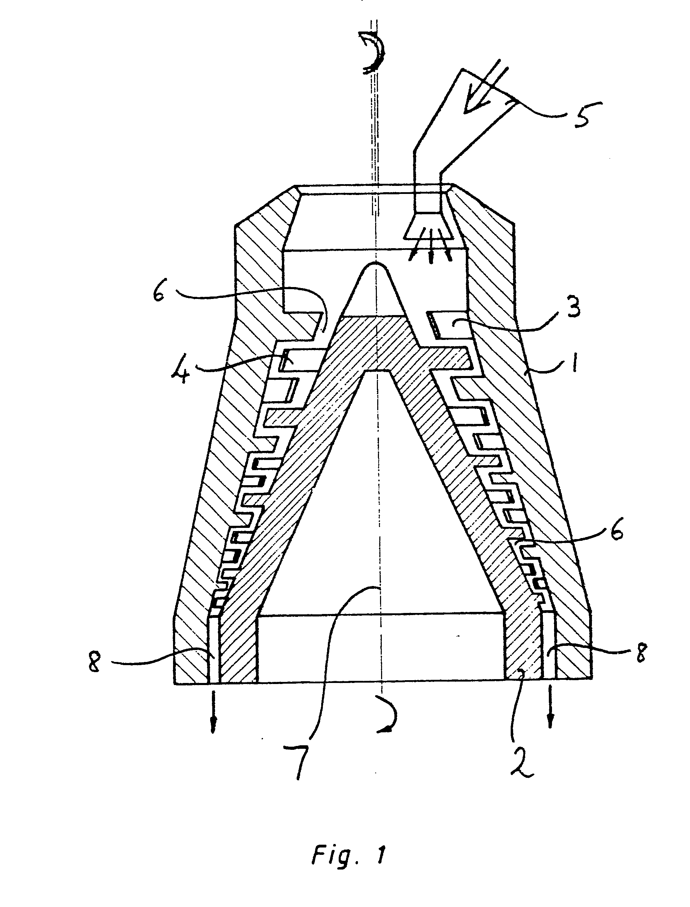

The apparatus of the present invention is illustrated by way of example, in Figure 1. The essence of this solution is that the components of the mixture are passed into a tapering gap between two conical bodies provided with intermeshing teeth.

Referring to Figure 1, the apparatus includes an otuer body (1) and an inner body (2) that both have a frusto conical shape, that is to say each is wider at its bottom than at its top. The bodies (1, 2) each have impact teeth (3, 4), the teeth (3, 4) of one body intermeshing with the teeth (4, 3) of the other body i.e. the teeth of one body being located in the spaces between the teeth of the other body. There is a gap (6) between the two bodies (1, 2). The teeth (3, 4) are located at seven different levels on the bodies (1, 2). However, as is clear from Figure 1, several circumferentially spaced teeth are provided on each body at any one level. The bodies (1, 2) rotate about a common axis (7) and so when the components of the mixture to be formed are fed from a feeding device (5) into the top of the gap (6), they are subjected to high speed impacts and pressure changes will occur periodically, although at a very high frequency, as the components are contacted in quick succession by the individual rotating teeth. The treated compounds pass out of the treatment apparatus through an annular outlet (8) at the bottom of gap (6).

Modes of carrying out the invention
The process of the invention is elucidated by the aid of the following non-limiting Example.

Example
In the disintegrator shown in Figure 1 an emulsion is prepared from 8 to 10 percent by volume of water and 90 to 92 percent by volume of so-called marine diesel fuel by passing the mixture of these two components through the disintegrator.

The test data of the thus-obtained emulsion prove that a ship diesel engine supplied with this emulsion works without any loss in its performance, in comparison with the usual light diesel fuel used for this purpose. Moreover, there is a fuel saving of about 4.5 to 6 percent by weight and, by taking into account the present prices, an 8 to 10 percent reduction in fuel costs. Finally, the pollution data of the engine supplied with the emulsion are better, particularly the $NO_x$ emulsion is reduced.

The mixture is passed with a velocity of 250 to 300 m/sec through the disintegrator of the Example but this velocity can be, in general, between 150 m/sec and 300 m/sec.

## Claims

1. An apparatus for forming mixtures having two or more components for chemical reactions and especially for forming mixtures containing fuel, e.g. oil, and water for combustion, the apparatus comprising a gap (6) formed between two bodies (1, 2) provided with impact elements (4) rotating in each other around a vertical axis (7), said apparatus furthermore having a feeder unit (5) for feeding the components into the upper part of said gap (6) and characterised in that the bodies each have the shape of a truncated cone with a downward widening diameter, the bodies being coaxially arranged one outside the other around the said vertical axis (7), and wherein the gap (6) between the outer body (1) and the inner body (2) is wider at its upper part than at its lower part, and wherein the inner body (2) has impact elements (4) fixed to its outer surface and the outer body (1) has impact elements (3) fixed to its inner surface.

2. A process of forming mixtures having two or more components for chemical reaction and especially of forming mixtures containing oil and water for combustion, the process comprising feeding the components into the upper part of the gap of an apparatus as claimed in claim 1.

## Patentansprüche

1. Vorrichtung zur Bildung von Gemischen aus zwei oder mehr Bestandteilen für chemische Reaktionen und besonders zur Bildung von Brennstoff, z.B. Öl, und Wasser enthaltende Gemische für die Verbrennung, wobei die Vorrichtung einen Zwischenraum (6) zwischen zwei Körpern (1, 2) umfaßt, die sich ineinander um eine vertikale Achse (7) drehende Schlagelemente (4) aufweisen, wobei jene Vorrichtung weiterhin eine Zufuhreinheit (5) zur Zufuhr der Bestandteile in den oberen Teil jenes Zwischenraums (6) umfaßt und dadurch gekennzeichnet ist, daß die Körper jeweils die Form eines Kegelstumpfes mit sich nach unten ausweitendem Durchmesser haben und umeinander um jene vertikale Achse (7) angeordnet sind und daß der Zwischenraum (6) zwischen dem äußeren (1) und inneren Körper (2) an seinem oberen Teil breiter als an seinem unteren Teil ist, und daß der innere Körper (2) an seiner Außenfläche befestigte Schlagelemente (4) und der äußere Körper (1) an seiner Innenfläche befestigte Schlagelemente (3) aufweist.

2. Verfahren zur Bildung von Gemischen aus zwei oder mehr Bestandteilen für die chemische Reaktion und besonders zur Bildung von Öl und Wasser enthaltenden Gemischen für die Verbrennung, bei dem man die Bestandteile in den oberen Teil des Zwischenraums einer Vorrichtung nach Anspruch 1 zuführt.

## Revendications

1. Dispositif pour former des mélanges comprenant deux ou plus de deux constituants pour des réactions chimiques, et spécialement pour former des mélanges contenant un combustible, par exemple du mazout, et de l'eau en vue d'une combustion, le dispositif présentant une fente (6) formée entre deux corps (1, 2) pourvus d'éléments d'impact (4) tournant l'un dans l'autre autour d'un axe vertical (7), ledit dispositif comportant en outre une unité d'alimentation (5) pour introduire les constituants dans la partie supérieure de ladite fente (6), caractérisé en ce que chacun des corps a la forme d'un cône tronqué avec un diamètre croissant vers le bas, les corps étant agencés coaxialement l'un à l'extérieur de l'autre autour dudit axe vertical (7), et dans lequel la fente (6) entre le corps extérieur (1) et le corps intérieur (2) est plus large à sa partie supérieure qu'à sa partie inférieure, et dans lequel le corps intérieur (2) comporte des éléments d'impact (4) fixés à sa surface extérieure et le corps extérieur (1) comporte des éléments d'impact (3) fixés à sa surface intérieure.

2. Procédé pour former des mélanges comprenant deux ou plus de deux constituants pour des réactions chimiques et spécialement pour former des mélanges contenant un combustible et de l'eau en vue d'une combustion, le procédé comprenant l'opération d'introduire les constituants dans la partie supérieure d'une fente d'un dispositif suivant la revendication 1.

Fig. 1